# EUROPÄISCHE PATENTSCHRIFT

(11) **EP 1 158 455 B1**
(45) Veröffentlichungstag und Bekanntmachung des Hinweises auf die Patenterteilung: **20.02.2008**
(21) Anmeldenummer: 01112623.2
(22) Anmeldetag: 23.05.2001
(51) Int. Cl.: G06K 13/12, B65G 57/30

(54) **Vorrichtung zur geordneten Ablage von ID-Karten**
Apparatus for ordered placement of ID cards
Dispositif pour le rangement de cartes d'identité

(30) Priorität: 23.05.2000 DE 10025394
(43) Veröffentlichungstag der Anmeldung: 28.11.2001
(73) Patentinhaber: Wincor Nixdorf International GmbH, 33106 Paderborn (DE)
(72) Erfinder: Landwehr, Martin, 33100 Paderborn (DE); Eickmeyer, Carsten, 33602 Bielefeld (DE)
(74) Vertreter: Schaumburg, Thoenes, Thurn, Landskron

(56) Entgegenhaltungen:
- EP-A- 0 926 087
- WO-A-00/15530
- US-A- 3 007 698

## Beschreibung

Die Erfindung betrifft eine Vorrichtung zur geordneten Ablage von ID-Karten, umfassend einen Behälter mit mindestens zwei Seitenwänden, einer Rückwand und einem Boden sowie eine Transportvorrichtung zum Transport einer abzulegenden Karte von einer Annahmestelle zu dem Behälter.

Unter ID-Karten sind alle Arten von Ausweiskarten, Bank- oder Scheckkarten, Telefonkarten und dergleichen zu verstehen. Je nach Einsatzzweck dieser Karten gibt es eine Reihe von Gelegenheiten, bei denen eine Karte von dem Gerät, in das sie eingeführt wurde, nicht an den Benutzer zurückgegeben werden soll, sei es dass der Benutzer eine zugehörige Geheimzahl nicht korrekt eingeben konnte und somit ein Betrugsversuch vermutet wird, sei es dass die Karte abgelaufen ist und für eine neuerliche Verwendung aufbewahrt werden soll oder dass ein auf der Karte gespeichertes Guthaben verbraucht ist. In diesem Fall wird die Karte von dem Lesegerät, in das sie eingeführt wurde, in einen Sammelbehälter transportiert. Bei einer bekannten Vorrichtung fallen die einbehaltenen Karten in ein hinreichend großes Fach. Dabei besteht die Gefahr, dass die Karten so ungünstig aufeinander fallen, dass sie relativ viel Raum beanspruchen und nur eine vergleichsweise begrenzte Menge in dem Behälter oder Fach aufbewahrt werden kann. Ferner ist insbesondere bei Kartenlesern, die auf einem Tisch aufgestellt werden sollen, unterhalb des Lesers kein Platz für ein Sammelfach.

Die WO 00/15530 A zeigt eine Vorrichtung zur geordneten Ablage von Blättern, umfassend einen Behälter mit mindestens zwei Seitenwänden sowie eine Transportvorrichtung zum Transport eines abzulegenden Blattes von einer Annahmestelle zu dem Behälter, wobei die Transportvorrichtung eine Förderbahn mit einem Endlosband hat und wobei der Förderbahn Mittel zugeordnet sind, um in dem Behälter stapelförmig abgelegte Blätter beim Einführen eines abzulegenden Blattes anzuheben und das abzulegende Blatt an die Unterseite des Blattstapels anzulegen. Diese Mittel zum Anheben des Blattstapels und zum Anlegen des abzulegenden Blattes arbeiten nach Art eines Stapelrades.

Die EP-A-0 926 087 beschreibt eine Vorrichtung zum Sortieren und Stapeln von Dokumenten, wobei die in einem Behälter stapelförmig abzulegenden Dokumente nacheinander an der Unterseite eines in dem Behälter gebildeten Stapels angelegt werden. Zum Anlegen eines abzulegenden Dokumentes dient eine verschwenkbare Klappe, auf die das abzulegende Dokument von einer Fördereinrichtung geschoben wird und welche das abzulegende Dokument bei einer Schwenkbewegung nach oben von unten an den Stapel anlegt. Die Klappe dient gleichzeitig als Weiche, um die auszusortierenden Dokumente nach unten abzulenken.

Die US-A-2 007 698 beschreibt ebenfalls eine Vorrichtung zum Stapeln von Karten, Blättern oder dergleichen in einem vertikalen Behälter, wobei die Karten mittels einer Förderbahn unter den Behälter transportiert und dann mit Hilfe eines durch die Förderbahn greifenden Stößels durch die Behälteröffnung hindurchgedrückt werden. Die Behälteröffnung ist dabei zumindest in einer Richtung kürzer als die Karte, so dass die Karte beim Eindrücken in den Behälter gebogen wird und sich anschließend wieder streckt, so dass sie durch die Behälteröffnung nicht nach unten fallen kann.

Der Erfindung liegt die Aufgabe zugrunde, eine Vorrichtung der eingangs genannten Art so auszubilden, dass die einbehaltenen Karten geordnet und damit raumsparend abgelegt werden können.

Diese Aufgabe wird erfindungsgemäß durch die im Anspruch 1 angegebenen Merkmale gelöst.

Mit der erfindungsgemäßen Vorrichtung können abzulegende Karten in dem Behälter gestapelt werden, in dem die jeweils neu hinzugefügte Karte als unterste Karte des Stapels nach dem Anheben der bereits abgelegten Karten durch den Transportteil eingeschoben wird. Im Gegensatz zu der Stapelung von oben braucht dabei das Niveau der Förderbahn nicht der Stapelhöhe (oder vice versa) angepasst zu werden. Eine auf die Förderbahn fallende abzulegende Karte wird von dem Endlosband zwischen die Seitenwände des Behälters eingeführt, bis sie an der Rückwand hängen bleibt, während das Endlosband aus dem Behälter austritt. Die jeweils unterste Karte wird von dem Endlosband auf die Rampe geschoben, wobei sie von dem horizontal bleibenden Endlosband abgehoben wird und schließlich nur noch mit ihrer Rücklaufkante auf dem Endlosband aufliegt. Läuft das Endlosband weiter, wird die Karte von der Rückwand des Behälters festgehalten und der auf dem Endlosband befestigte

Transportkeil gleitet mit seiner entgegen der Transportrichtung ansteigenden Keilfläche unter die Rücklaufkante der abgelegten Karte, wodurch diese zusammen mit den möglicherweise auf ihr liegenden weiteren Karten angehoben wird. Während der Transportkeil nun unter dem angehobenen Kartenstapel durchgleitet, kann eine unmittelbar auf den Transportkeil folgende, flach auf dem Endlosband aufliegende Karte unter den Stapel eingezogen werden, bis sie ebenfalls auf die Rampe im Übergangsbereich von Boden und Rückwand aufläuft und schließlich an der Rückwand des Behälters hängenbleibt. Diese Lösung hat den Vorzug, daß sie neben dem Endlosband und seinem Antrieb keine weiteren bewegten Teile und Antriebe für das Anheben das Kartenstapels benötigt.

Statt eines Endlosriemens kann die Förderbahn natürlich auch zwei oder mehr zueinander parallele und in einem Abstand nebeneinander angeordnete Endlosbänder umfassen.

Zweckmäßigerweise sind an jedem Endlosband mehrere Transportkeile in Abständen voneinander angeordnet, die größer als die in Transportrichtung gemessene Abmessung der abzulegenden Karten sind. Damit ist sichergestellt, daß die Karten zwischen zwei aufeinander folgenden Transportkeilen flach auf der Förderbahn zu liegen kommen können.

Vorzugsweise hat der Behälter eine Vorderwand, an deren unterem Ende eine Durchtrittsöffnung für die Förderbahn ausgebildet ist, wobei mindestens ein Abschnitt des die Durchtrittsöffnung nach oben hin begrenzenden Öffnungsrandes einen gegenüber der Höhe der Transportkeile geringeren Abstand von dem Endlosband hat. Wenn eine Karte so auf die Förderbahn fällt, daß sie teilweise auf einem Transportkeil zu liegen kommt, wird durch diese Maßnahme sichergestellt, daß die Karte beim Einlaufen in den Behälter durch den als Abstreifer wirkenden Öffnungsrand von dem Transportkeil heruntergeschoben wird, bis sie flach auf dem Endlosband liegt.

Zweckmäßigerweise ist die Transportvorrichtung in einem Gehäuse eingeschlossen, das eine oberhalb der Förderbahn gelegene Eintrittsöffnung zum Einführen einer abzulegenden Karte hat. Das so gestaltete Gerät kann mit jedem Kartenleser kombiniert werden, der einen Austrittsspalt für eine abzulegende Karte hat, wobei ein besonderer Vorteil der erfindungsgemäßen Lösung darin liegt, daß nun auch ein als Tischgerät ausgebildeter Kartenleser mit einer Sammelvorrichtung für einzuziehende Karten ausgestattet werden kann, bei dem nach unten kein Platz für ein Behälter ist, in den die Karten einfach hinein fallen könnten.

Um einem Zugriff auf die abgelegten Karten durch unbefugte Personen vorzubeugen, kann der Behälter mit einem Schloß an dem Rahmen oder Gehäuse festgeschlossen sein.

Um auch in diesem Fall problemlos erkennen zu können, wieviele Karten in dem Behälter bereits gestapelt sind, kann in mindestens einer der vom Behälterboden aufragenden Behälterwände ein vertikaler Schlitz ausgebildet sein, durch den dann die Stapelhöhe zu erkennen ist.

Für die Steuerung der erfindungsgemäßen Vorrichtung kann nahe dem der Eintrittsöffnung zugekehrten Ende der Förderbahn eine Lichtschranke angeordnet sein, wobei die Lichtstrecke sowohl durch eine eingeführte Karte als auch durch einen vom Untertrum zum Obertrum des Endlosbandes wechselnden Transportkeil unterbrechbar ist. Dies bietet die Möglichkeit, das Ein- und Ausschalten der Transportvorrichtung auf einfache Weise dadurch zu steuern, daß die Transportvorrichtung durch Einschieben einer Karte eingeschaltet und durch den Eintritt eines Transportkeiles oder nach einem Durchlauf einer vorbestimmten Anzahl von Transportkeilen durch die Lichtstrecke wieder abgeschaltet wird.

Weitere Merkmale und Vorteile der Erfindung ergeben sich aus der folgenden Beschreibung, welche in Verbindung mit den beigefügten Figuren die Erfindung anhand von Ausführungsbeispielen erläutert. Es zeigen:
- Fig. 1 und 2: jeweils eine schematische, teilweise geschnittene Seitenansicht einer ersten Ausführungsform der erfindungsgemäßen Vorrichtung in zwei unterschiedlichen Betriebszuständen und
- Fig. 3: eine schematische Seitenansicht einer abgewandelten Ausführungsform der erfindungsgemäßen Vorrichtung.

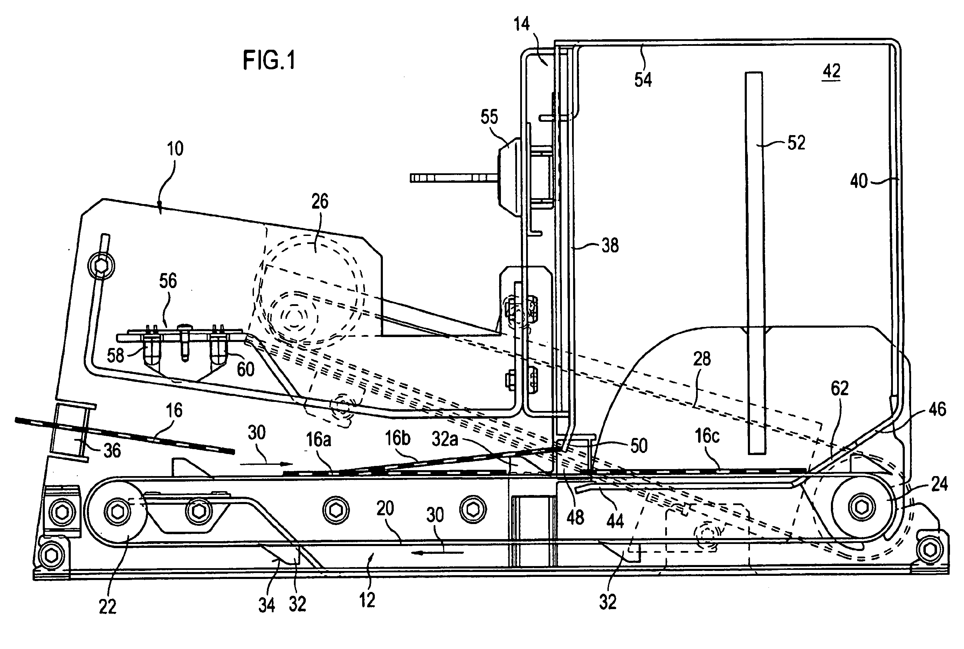

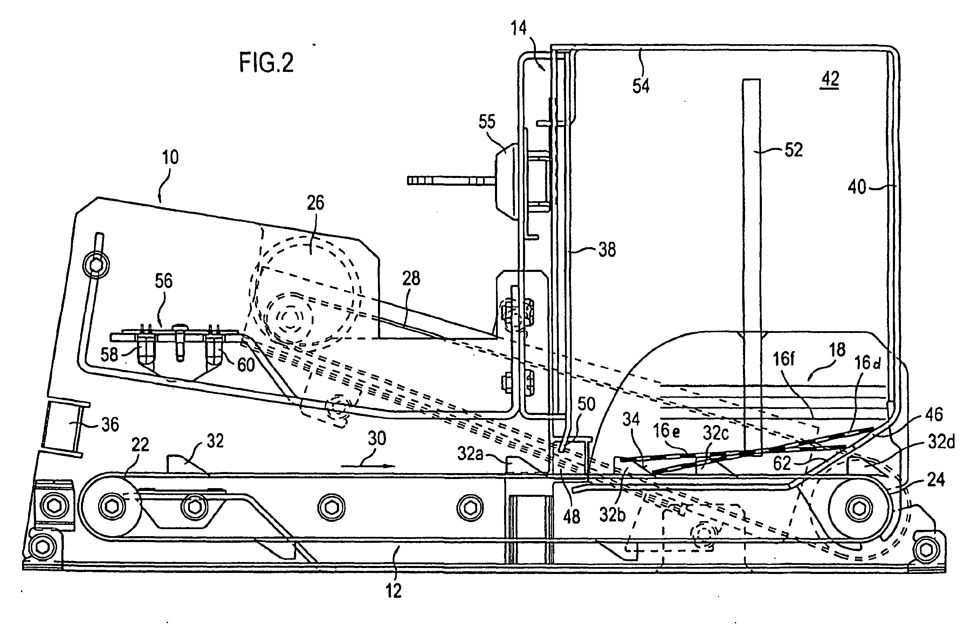

Die in den Figuren 1 und 2 dargestellte Vorrichtung umfaßt ein Gehäuse oder einen Rahmen 10 mit einer darin angeordneten Transportvorrichtung 12 und einen Behälter 14 zur Aufnahme abzulegender Karten 16 in Form eines Kartenstapels 18 (Figur 2).

Die Transportvorrichtung 12 umfaßt zwei Endlosbänder 20, von denen nur eines in der Seitenansicht zu sehen ist und die über am Rahmen 10 gelagerte vordere und hintere Umlenkrollen 22 bzw. 24 geführt sind. Die Umlenkrollen 24 zumindest werden von einem Motor 26 über einen Antriebsriemen 28 angetrieben, so daß die Endlosbänder in Richtung der Pfeile 30 umlaufen.

Auf der Außenseite jedes Endlosbandes 20 sind Transportkeile 32 befestigt, die eine von der Oberfläche des Endlosbandes 20 her ansteigende Keilfläche 34 haben. Der Abstand zwischen zwei aufeinander folgenden Transportkeilen 32 ist größer als die in derselben Richtung gemessene Abmessung einer abzulegenden Karte 16.

Oberhalb der vorderen Umlenkrolle 22 befindet sich eine Zuführöffnung 36, durch die eine abzulegende Karte 16 beispielsweise von einem neben der Vorrichtung angeordneten Kartenleser hindurch katapultiert wird, so daß sie auf die von den Endlosbändern 20 gebildete Förderbahn fällt.

Der oberhalb des rechten oder rückwärtigen Bereiches der Förderbahn angeordnete Behälter 14 umfaßt eine Frontwand 38, eine Rückwand 40, zwei Seitenwände 42 und einen Boden 44, der mit der Rückwand 40 durch einen Übergangsabschnitt 46 verbunden ist, der eine in Transportrichtung 30 flach ansteigende Rampe bildet. Zwischen dem Boden 44 und dem unteren Ende der Frontwand 38 ist ein Einführspalt 48 für das Einführen der abzulegenden Karten in den Behälter 14 ausgebildet. Der Abstand der Unterkante bzw. des den Einführspalt 48 nach oben hin begrenzenden Spaltrandes 50 von den Endlosbändern 20 ist dabei so gewählt, daß der Spaltrand 50 als Abstreifer wirkt, durch den eine teilweise auf einem Transportkeil 32 liegende Karte 16 von dem Transportkeil 32 heruntergeschoben wird, wenn der Transportkeil in den Behälter 14 einläuft. Um die Abstreiffunktion sicherzustellen, kann es zweckmäßig sein, wenn der Abstand des Spaltrandes 50 von den Endlosbändern 20 geringer als die Höhe eines Transportkeils 32 ist. Das bedeutet, daß entsprechende Aussparungen für den Durchtritt der Transportkeile 12 in dem oberen Spaltrand 50 ausgebildet sein müssen.

In mindestens einer der Seitenwände 42 ist ein vertikaler Spalt 52 ausgebildet, durch den hindurch die Stapelhöhe der in dem Behälter 14 abgelegten Karten, d.h. der Füllstand des Behälters 14 erkennbar ist. Der Behälter 14 ist durch einen Deckel 54 verschlossen und durch ein Schloß 55 mit dem Rahmen oder Gehäuse 10 verriegelt, so daß der Zugriff zu den im Behälter 14 abgelegten Karten nur autorisierten Personen möglich ist.

Im folgenden wird die Funktion der soweit beschriebenen Vorrichtung erläutert, wobei in den Figuren aufeinander folgende Stellungen eines Transportkeiles 32 im Bereich des Behälters 14 mit 32a bis 32d bezeichnet sind.

In Figur 1 wird eine Karte 16 durch die Zuführöffnung 36 eingeschoben und fällt auf die Förderbahn, wobei die Transportkeile 32 eine beliebige Stellung haben können. Durch das Einführen der Karte 16 wird eine oberhalb der Förderbahn angeordnete Reflexlichtschranke 56 aktiviert, in dem das von einem Lichtsender 58 ausgehende Licht von der Kartenoberfläche zu einem Empfänger 60 der Lichtschranke 56 reflektiert wird. Das Ausgangssignal der Lichtschranke 56 aktiviert über eine nicht dargestellte Steuerung den Antriebsmotor 26, so daß die Endlosbänder 20 in Richtung der Pfeile 30 umlaufen.

Die Karte 16 kann so auf die Endlosbänder 20 fallen, daß sie flach auf diesen liegt, wie dies bei 16a in Figur 1 dargestellt ist. Sie kann aber auch auf einem Transportkeil 32 zu liegen kommen, wie dies bei 16b wiedergegeben ist. Diese Karte bleibt bei der Bewegung in Richtung auf den Behälter 14 an dem Rand 50 der Frontwand 38 hängen und wird von dem Transportkeil 32 abgestreift, wenn diese aus der Position 32a in den Behälter 14 eintritt, so daß die Karte dann die Position 16a einnimmt, in der sie den Einführspalt 48 passieren kann. Sie gelangt dann in die Position 16c.

Beim weiteren Vorrücken wird die Karte aus der Position 16c durch den nachfolgenden Transportkeil auf die Rampe 46 geschoben (Figur 2, Position 16d). Irgendwann wird der Widerstand der Karte in dieser Position gegen den an ihrem rückwärtigen Rand anliegenden Transportkeil 32b so groß, daß die Karte an der Keilfläche 34 emporgleitet, bis sie auf dem Transportkeil zu liegen kommt (Keilposition 32c, Kartenposition 16e). Die Transportkeile gleiten nun unter der Karte 16e hindurch und verlassen den Kartenbehälter durch Öffnungen 62 in der Rampe 46. Die Karte 16e fällt dann wieder in die Position 16d zurück. Waren bei diesem Vorgang in dem Kartenbehälter 14 bereits weitere Karten 16 vorhanden, wird der von diesen Karten gebildete Stapel 18 durch die abzulegende Karte angehoben, so daß diese problemlos unter die unterste Karte 16f des Stapels 18 geschoben werden kann.

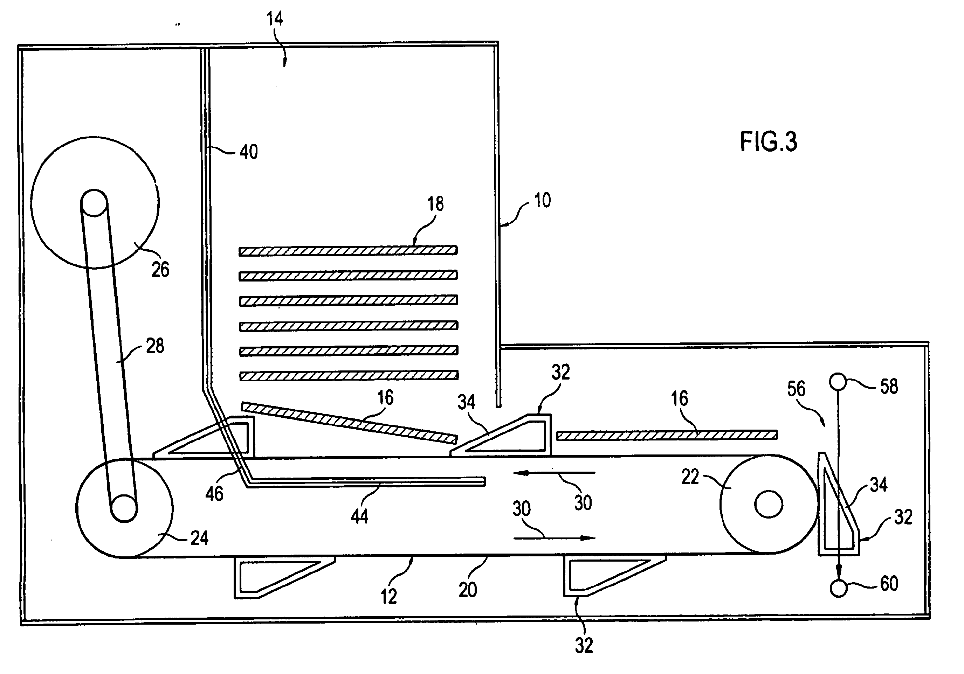

Die in der Figur 3 dargestellte Ausführungsform zeigt die erfindungsgemäße Vorrichtung in einer Ansicht von der anderen Seite. Gleiche Teile sind mit gleichen Bezugszeichen versehen. Im Unterschied zu der in den Figuren 1 und 2 dargestellten Vorrichtung sind die Behälterwände mit Ausnahme der Rückwand 40 und des Bodens 44 Teile des Gehäuses 10. Der Motor 26 ist hinter dem Behälter 14 angeordnet. Die Lichtschranke 56 ist am vorderen Ende der Förderbahn so angeordnet, daß die Lichtstrecke zwischen dem Sender 58 und dem Empfänger 60 sowohl von einer abzulegenden Karte 16 als auch von einem Transportkeil 32 unterbrochen werden kann. Dies bietet neben dem oben beschriebenen Einschalten des Motors 26 durch die eingeführte Karte 16 die Möglichkeit, den Motor 26 auch in einer bestimmten Stellung der Endlosbänder 20 wieder abzuschalten. Diese Stellung ist in Figur 3 dargestellt. Sie stellt praktisch sicher, daß die.abzulegende Karte 16 beim Einführen in die erfindungsgemäße Vorrichtung stets flach auf den Endlosbändern 20 zu liegen kommt. Damit sind Störungen ausgeschlossen, die möglicherweise dadurch hervorgerufen werden, daß die Karte auf einen Transportkeil 32 fällt, von dem sie dann erst wieder abgestreift werden muß.

### Bezugszeichenliste:

- 10: Rahmen, Gehäuse
- 12: Transportvorrichtung
- 14: Behälter
- 16: Karte
- 18: Kartenstapel
- 20: Endlosband
- 22: vordere Umlenkrolle
- 24: hintere Umlenkrolle
- 26: Motor
- 28: Antriebsriemen
- 30: Transportvorrichtung
- 32: Transportkeil
- 34: Keilfläche
- 36: Zuführöffnung
- 38: Frontwand
- 40: Rückwand
- 42: Seitenwand
- 44: Boden
- 46: Übergangsbereich, Rampe
- 48: Einführspalt
- 50: Spaltrand
- 52: vertikaler Spalt
- 54: Deckel
- 55: Schloß
- 56: Lichtschranke
- 58: Lichtsender
- 60: Empfänger
- 62: Öffnung

## Patentansprüche

1. Vorrichtung zur geordneten Ablage von ID-Karten (16), umfassend einen Behälter (14) mit mindestens zwei Seitenwänden (42), einer Rückwand (40) und einem Boden (44) sowie eine Transportvorrichtung (12) zum Transport einer abzulegenden Karte (16) von einer Annahmestelle zu dem Behälter (14), wobei die Transportvorrichtung (12) eine Förderbahn hat, die sich parallel zum Boden (44) des Behälters (14) durch diesen hindurch erstreckt und mindestens ein Endlosband (20) hat, dessen Obertrum oberhalb des Bodens (44) des Behälters (14) durch diesen hindurchgeführt ist, wobei in dem Übergangsbereich (46) von Rückwand (40) und Boden (44) ein Austrittsschlitz (62) für das Endlosband (20) ausgebildet ist, und dass der Förderbahn Mittel (32, 46) zugeordnet sind, um eine oder mehrere stapelförmig in dem Behälter (14) abgelegte Karten (18) beim Einführen einer abzulegenden Karte (16) über das Niveau der Förderbahn anzuheben, wobei der Übergangsbereich (46) von Rückwand (40) und Boden (44) des Behälters (14) als in Transportrichtung (30) ansteigende Rampe ausgebildet ist und wobei an der Außenseite des Endlosbandes (20) mindestens ein Transportkeil (32) mit einer von der Bandaußenseite her ansteigenden Keilfläche (34) befestigt ist.

2. Vorrichtung nach Anspruch 1, **dadurch gekennzeichnet, dass** die Förderbahn zwei zueinander parallele und mit Abstand nebeneinander angeordnete Endlosbänder (20) umfasst.

3. Vorrichtung nach Anspruch 1 oder 2, **dadurch gekennzeichnet, dass** an jedem Endlosband (20) mehrere Transportkeile (32) in Abständen voneinander angeordnet sind, die größer als die in Transportrichtung (30) gemessene Abmessung der abzulegenden Karte (16) sind.

4. Vorrichtung nach einem der Ansprüche 1 bis 3, **dadurch gekennzeichnet, dass** der Behälter (14) eine Vorderwand (38) hat, an deren unterem Ende eine Durchtrittsöffnung (48) für die Förderbahn ausgebildet ist, wobei mindestens ein Abschnitt des die Durchtrittsöffnung (48) nach oben hin begrenzenden Öffnungsrandes (50) eine gegenüber der Höhe des Transportkeiles (32) geringeren Abstand von dem Endlosband (20) hat.

5. Vorrichtung nach einem der Ansprüche 1 bis 4, **dadurch gekennzeichnet, dass** sie einen Rahmen oder ein Gehäuse (10) zur Aufnahme der Transportvorrichtung (12) mit einer oberhalb der Förderbahn gelegenen Eintrittsöffnung (36) zum Einführen einer abzulegenden Karte (16) hat.

6. Vorrichtung nach Anspruch 5, **dadurch gekennzeichnet, daß** nahe dem der Eintrittsöffnung (10) zugekehrten Ende der Förderbahn eine Lichtschranke (56) so angeordnet ist, daß die Lichtstrecke sowohl durch eine eingeführte Karte (16) als auch durch einen vom Untertrum zum Obertrum eines Endlosbandes (20) wechselnden Transportkeil (32) unterbrechbar ist.

7. Vorrichtung nach einem der Ansprüche 1 bis 6, **dadurch gekennzeichnet, dass** der Behälter (14) mit Hilfe eines Schlosses (55) an dem Rahmen oder Gehäuse (10) festschließbar ist.

8. Vorrichtung nach einem der Ansprüche 1 bis 7, **dadurch gekennzeichnet, dass** in mindestens einer der vom Behälterboden (44) aufragenden Behälterwände (40, 42, 38) ein vertikaler Schlitz (52) ausgebildet ist.

## Claims

1. Arrangement for the ordered placement of ID cards (16), comprising a container (14) having at least two side walls (42), a rear wall (40) and a base (44), and also comprising a transporting arrangement (12) by means of which a card (16) which is to be placed in position can be transported from a pick-up location to the container (14), it being the case that the transporting arrangement (12) has a conveying path which extends through the container (14), parallel to the base (44) of the latter, and has at least one endless belt (20), of which the top strand is guided through the container (14), above the base (44) of the latter, an outlet slot (62) for the endless belt (20) being formed in the transition region (46) of the rear wall (40) and base (44), and that the conveying path is assigned means (32, 46) by way of which one or more cards (18) placed in stack form in the container (14) can be raised above the level of the conveying path when a card (16) which is to be placed in position is introduced, the transition region (46) of the rear wall (40) and base (44) of the container (14) being designed as a ramp which slopes up in the transporting direction (30), and the outside of the endless belt (20) having fastened on it at least one transporting wedge (32) with a wedge surface (34) which slopes up from the outside of the belt.

2. Arrangement according to Claim 1, **characterized in that** the conveying path comprises two parallel endless belts (20) which are spaced apart one beside the other.

3. Arrangement according to Claim 1 or 2, **characterized in that**, on each endless belt (20), a plurality of transporting wedges (32) are spaced apart from one another by distances which are larger than the dimension of the card (16) which is to be placed in position as measured in the transporting direction (30).

4. Arrangement according to one of Claims 1 to 3, **characterized in that** the container (14) has a front wall (38) with a through-opening (48) for the conveying path formed at its bottom end, it being the case that at least one portion of the opening periphery (50), which bounds the through-opening (48) in the upward direction, is spaced apart from the endless belt (20) by a distance which is smaller than the height of the transporting wedge (32).

5. Arrangement according to one of Claims 1 to 4, **characterized in that** it has a frame or a housing (10) for accommodating the transporting arrangement (12), having an inlet opening (36) which is located above the conveying path and through which a card (16) which is to be placed in position can be introduced.

6. Arrangement according to Claim 5, **characterized in that**, in the vicinity of that end of the conveying path which is directed towards the inlet opening (10), a light barrier (56) is arranged such that the light can be interrupted both by a card (16) which has been introduced and by a transporting wedge (32), which changes between the bottom strand and the top strand of an endless belt (20).

7. Arrangement according to one of Claims 1 to 6, **characterized in that** the container (14) can be fixed to the frame or housing (10) with the aid of a lock (55).

8. Arrangement according to one of Claims 1 to 7, **characterized in that** a vertical slot (52) is formed in at least one of the container walls (40, 42, 38) rising up from the container base (44).

## Revendications

1. Dispositif de dépôt ordonné de cartes (16) d'identification, comprenant un récipient (14) ayant au moins deux parois (42) latérales, une paroi (40) arrière et un fond (44) ainsi qu'un dispositif (12) de transport d'une carte (16) à déposer d'un point de prise au récipient (14), le dispositif (12) de transport ayant une voie convoyeuse qui s'étend parallèlement au fond (44) de récipient (14) en le traversant et au moins une bande (20) sans fin, dont le brin supérieur au-dessus du fond (44) de ce récipient (14) passe à travers celui-ci, dans lequel dans la partie (46) de transition de la paroi (40) arrière et du fond (44) est formée une fente (62) de sortie de la bande (20) sans fin et en ce qu'il est associé à la voie convoyeuse des moyens (32, 46) pour soulever une ou plusieurs cartes (18) déposées en forme de pile dans le récipient (14) lors de l'introduction d'une carte (16) à déposer au dessus du niveau de la voie convoyeuse, la partie (46) de transition de la paroi (40) arrière et du fond (44) du récipient (14) étant constituée sous la forme d'une rampe montant dans le dispositif (30) de transport et il est fixé sur le côté extérieur de la bande (20) sans fin au moins un coin (32) de transport ayant une surface (34) de coin montant depuis le côté extérieur de la bande.

2. Dispositif suivant la revendication 1, **caractérisé en ce que** la voie convoyeuse comprend deux bandes (20) sans fin parallèles entre elles et disposées l'une à côté de l'autre en étant à distance.

3. Dispositif suivant la revendication 1 ou 2, **caractérisé en ce que** sur chaque bande (20) sans fin sont disposés plusieurs coins (32) de transport à des distances les uns des autres qui sont plus grandes que la dimension, mesurée dans la direction (30) de transport, des cartes (16) à déposer.

4. Dispositif suivant l'une des revendications 1 à 3, **caractérisé en ce que** le récipient (14) a une paroi (38) avant, à l'extrémité inférieure de laquelle est formée une ouverture (48) de passage de la voie convoyeuse, au moins une partie du bord (50) d'ouverture, délimitant l'ouverture (48) de passage vers le haut, ayant une distance à la bande (20) sans fin plus petite que la hauteur du coin (32) de transport.

5. Dispositif suivant l'une des revendications 1 à 4, **caractérisé en ce qu'**il a un bâti ou une enveloppe (10), pour loger le dispositif (12) de transport, ayant une ouverture (36) d'entrée au-dessus de la voie convoyeuse pour l'introduction d'une carte (16) à déposer.

6. Dispositif suivant la revendication 5, **caractérisé en ce qu'**il est monté près de l'extrémité, tournée vers l'ouverture (10) d'entrée, de la voie convoyeuse une cellule (56) photo-électrique de façon à ce que la section lumineuse soit interrompue tant par une carte (16) introduite qu'également par un coin (32) de transport passant du brin inférieur au brin supérieur d'une bande (20) sans fin.

7. Dispositif suivant l'une des revendications 1 à 6, **caractérisé en ce que** le récipient (14) peut être fermé solidement à l'aide d'un cadenas (55) sur le bâti ou l'enveloppe (10).

8. Dispositif suivant l'une des revendications 1 à 7, **caractérisé en ce qu'**il est formé une fente (52) verticale dans au moins l'une des parois (40, 42, 38) du récipient faisant saillie du fond (44) du récipient.
